# EUROPEAN PATENT APPLICATION

(11) **EP 4 056 454 A1**
(43) Date of publication of application: **14.09.2022**
(21) Application number: 22161151.0
(22) Date of filing: 09.03.2022
(51) Int. Cl.: B62B 5/00, B64D 11/00

(54) **TROLLEY ALERT SYSTEM**

(30) Priority: 09.03.2021 IN 202141009813
(71) Applicant: Goodrich Aerospace Services Private Limited, 560048 Bangalore (IN)
(72) Inventor: DUBEY, Anuradha, 560016 Bangalore (IN); JOSHI, Suhas, 560061 Bangalore (IN)
(74) Representative: Dehns

(57) **Abstract**

A system comprises a trolley (102) for travel along an aisle of an aircraft interior. An infrared sensor (104) is mounted on the trolley (102), a controller (112) is operatively connected to the infrared sensor (104), and an output device (114) is operatively connected to the controller (112). The controller (112) includes machine readable instructions configured to cause the controller (112) to receive input from the infrared sensor (104) and to issue an alert to the output device (114) upon detection of an obstacle in the input from the infrared sensor (104).

## Description

### BACKGROUND

### 1. Field

The present disclosure is directed generally to aircraft interior systems, and more particularly to moving trolleys, such as galley trolleys that move along the aisles of aircraft interiors.

### 2. Description of Related Art

During flight, it can be difficult to keep the food trolley moving in a straight line while pushing it along the passenger way in the aircraft cabin. Passengers often find the legroom tight and to feel more comfortable extend their feet into the aircraft aisle. Sometimes small children suddenly move out from their assigned seat into the aisle during air travel. The feet and elbows of passengers seated in aisle seats present obstacles for the food trolley, as do children moving into the aisle. When a trolley moves with the drinks or food loaded, it is difficult to keep the trolley in line due to such obstacles, and a moving trolley could potentially hurt passengers' feet, elbows, or arms by accident during a flight.

The conventional techniques have been considered satisfactory for their intended purpose. However, there is an ever present need for improved systems and methods for improved trolley alert systems. This disclosure provides a solution for this need.

### SUMMARY

A system comprises a trolley for travel along an aisle of an aircraft interior. An infrared sensor is mounted on the trolley, a controller is operatively connected to the infrared sensor, and an output device is operatively connected to the controller. The controller includes machine readable instructions configured to cause the controller to receive input from the infrared sensor and to issue an alert to the output device upon detection of an obstacle in the input from the infrared sensor.

The trolley can include a handle on a back portion of the trolley for a user to push the trolley and the infrared sensor can be mounted to a front portion of the trolley, opposite the handle. The output device can be mounted on a back portion of the trolley opposite the infrared sensor for viewing by the user while pushing the trolley.

The infrared sensor can include a plurality of infrared pixels, and the controller can include machine readable instructions for forming image data from the input data from the infrared sensor. The machine readable instructions can be configured to analyze the image data for movement, and to issue the alert upon detection of motion of a body part in front of the trolley. The controller can be configured to detect a body part of a passenger in a path of the trolley and to issue an alert to a user to avoid colliding the trolley with the body part of the passenger. The controller can be configured to detect the body part and alert the user only if the body part is detected within a predetermined radius from the infrared sensor. The controller can be configured to detect the movement and alert the user only if the movement is detected within a predetermined radius from the infrared sensor.

The output device can include a display configured to display images to the user based on the image data, such as displaying an alert. The alert can be a visual alert and can include an indication of a human/animal object in front of the trolley. The visual alert can also include an indication of direction to an object detected by the infrared sensor, and/or a distance to an object detected by the infrared sensor. The output device can include a speaker for issuing an audio alert. The sound output can include at least one of a verbal warning to passengers to clear a path for the trolley.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic perspective view of an embodiment of a an aircraft interior constructed in accordance with the present disclosure, showing a trolley having an alert system travelling along an aisle of the aircraft interior; and
Fig. 2 is a schematic diagram of the alert system of Fig. 1.

### DETAILED DESCRIPTION

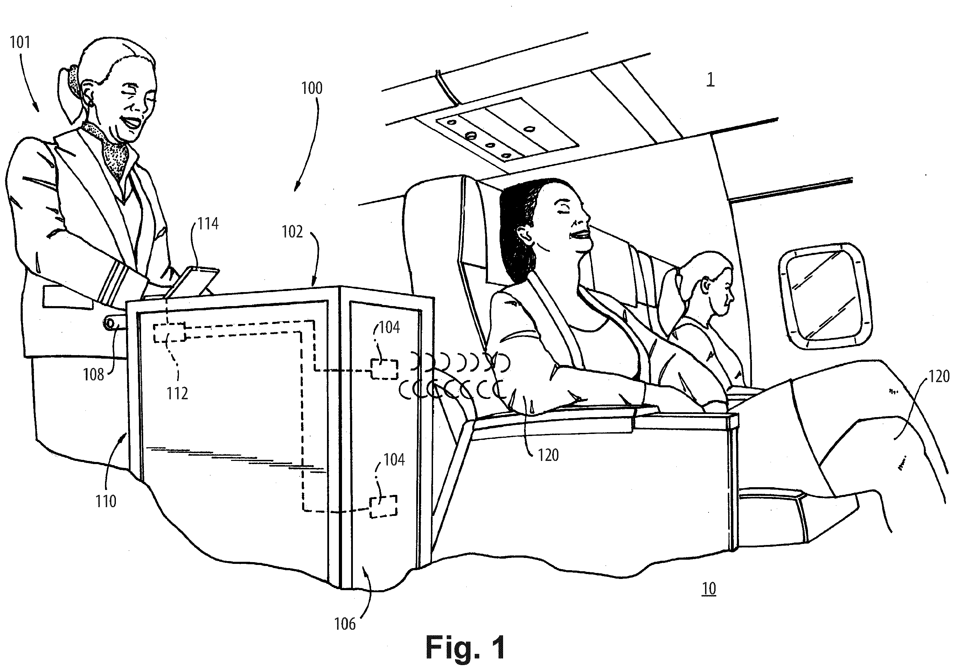

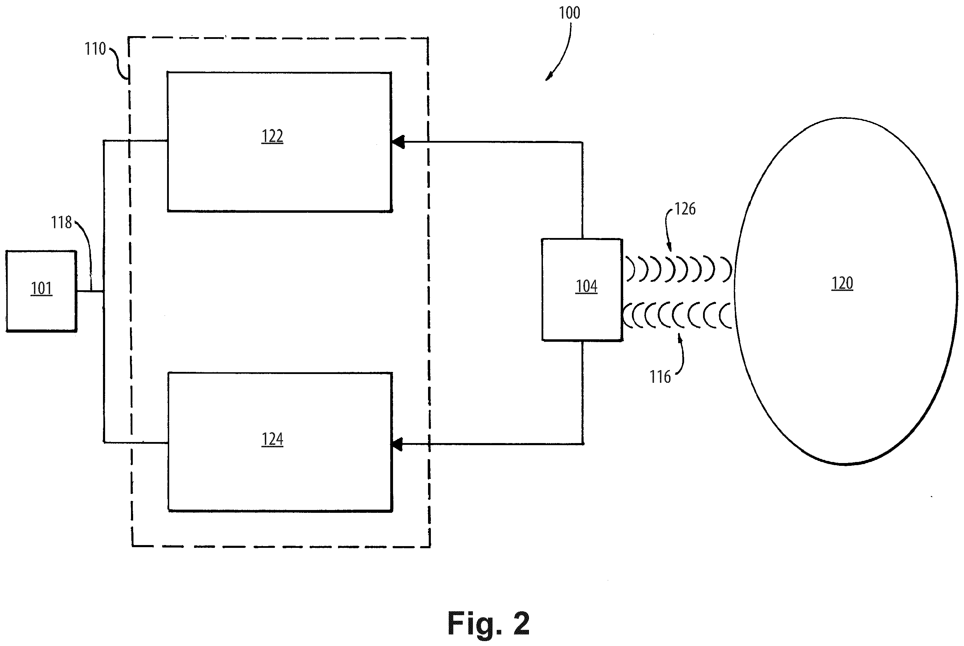

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to improve trolley movement throughout the aisles of the aircraft, reducing the possibility of collision with obstacles or passengers.

A system 100 (e.g. a trolley alert system) can include a trolley 102 e.g. for travelling along an aisle 10 of an aircraft interior 1. At least one infrared sensor 104 can be mounted on the trolley 102 in any suitable position for detection of obstacles within the aisle 10. For example, the infrared sensor 104 can be mounted to a front portion 106 of the trolley 102, such as an upper portion of the trolley 102 to detect higher placed obstacles 120 such as elbows, a mid portion to detect obstacles 120 such as knees, or a position closer to the floor than the mid-portion to detect lower placed obstacles 120 such as feet, small children, luggage, or the like. The trolley 102 can include a handle 108 mounted to a back portion 110 of the trolley 102 for pushing the trolley 102 down the aisle 10. A controller 112 can be operatively connected to the infrared sensor 104, and an output device 114. The output device 114 can be operatively connected to the controller 112 and can be mounted to the back portion 110 of the trolley 102, proximate the handle 108, and opposite the sensor 104. The output device 114 can be positioned to be read by a user 101 (e.g. flight staff, not shown in Fig. 1) operating/pushing the trolley 102.

The controller 112 can include machine readable instructions configured to cause the controller 112 to receive input 116 (e.g. temperature data) from the infrared sensor 104 and to issue an alert 118 to the output device 114 upon detection of an obstacle 120 in the input 116 from the infrared sensor 104 such as a body part of a passenger (e.g. elbow or foot), or a child moving about the aisle 10. For example, the infrared sensor 104 can include a plurality of infrared pixels 126, and machine readable instructions of the controller 112 can include forming image data from the input data 116 from the infrared sensor 104. The controller 112 can analyze the image data for movement, and to issue the alert 118 upon detection of motion of the obstacle 120 in front of the trolley 102. The controller can issue the alert 118 to the output device 114 to notify the user 101 of the obstacle 120 to avoid colliding the trolley 102 with the obstacle 120, thereby preventing injury to a passenger for example. The controller 112 can be configured to only issue the alert 118 if movement and/or the obstacle 120 are detected within a predetermined radius of the infrared sensor 104 (e.g. within about 15cm or within about 30cm, or based on the dimensions of the aisle 10).

The output device 114 can include a display 122 (e.g. a graphical user interface and/or personal electronic device) configured to display images to the user 101 based on the image data received from the sensor 104. For example, the alert can be a visual alert displayed on the display 122 and can include an indication of a human/animal object (e.g. obstacle 120) in front of the trolley 102. The visual alert on display 122 can also include an indication of direction and/or distance to the object detected by the infrared sensor 104. Additionally, or alternatively, the output device 110 can include a speaker 124 for issuing an audio alert, such as verbal warning requesting passengers to clear a path for the trolley 102, or a non-verbal warning to alert the attention of the passengers.

The methods and systems of the present disclosure, as described above and shown in the drawings, provide for improved trolley movement about the aisle and faster reaction time for crew to sense obstacles and correct trolley motion before an injury can occur. While the apparatus and methods of the subject disclosure have been shown and described, those skilled in the art will readily appreciate that changes and/or modifications may be made thereto without departing from the scope of the subject disclosure.

## Claims

1. A system comprising:
a trolley (102) for travel along an aisle of an aircraft interior;
an infrared sensor (104) mounted on the trolley (102);
a controller (112) operatively connected to the infrared sensor (104); and
an output device (114) operatively connected to the controller (112), wherein the controller (112) includes machine readable instructions configured to cause the controller (112) to receive input from the infrared sensor (104) and to issue an alert to the output device (114) upon detection of an obstacle in the input from the infrared sensor (104).

2. The system as recited in claim 1, wherein the infrared sensor (104) is mounted to a front portion of the trolley (102) and wherein the trolley (102) includes a handle on a back portion of the trolley (102) for a user to push the trolley (102).

3. The system as recited in claim 1 or 2, wherein the infrared sensor (104) includes a plurality of infrared pixels, and wherein the controller (112) includes machine readable instructions for forming image data from the input data from the infrared sensor (104).

4. The system as recited in claim 3, wherein the output device (114) includes a display configured to display images to a user based on the image data.

5. The system as recited in claim 4, wherein the output device (114) is on a back portion of the trolley (102) opposite the sensor (104) for viewing by the user while pushing the trolley (102).

6. The system as recited in claim 3, wherein the controller (112) is configured to detect a body part of a passenger in a path of the trolley (102) and to issue an alert to a user to avoid colliding the trolley (102) with the body part of the passenger.

7. The system as recited in claim 6, wherein the controller (112) is configured to detect the body part and alert the user only if the body part is detected within a predetermined radius from the infrared sensor (104).

8. The system as recited in claim 3, wherein the controller (112) includes machine readable instructions configured to analyze the image data for movement, and to issue the alert upon detection of motion of a body part in front of the trolley (102).

9. The system as recited in claim 8, wherein the controller (112) is configured to detect the movement and alert the user only if the movement is detected within a predetermined radius from the infrared sensor (104).

10. The system as recited in any preceding claim, wherein the output device (114) includes a display and wherein issuing an alert includes displaying a visual alert on the display.

11. The system as recited in claim 10, wherein the visual alert includes an indication of a human/animal object in front of the trolley (102).

12. The system as recited in claim 10, wherein the visual alert includes an indication of direction to an object detected by the infrared sensor (104).

13. The system as recited in claim 10, wherein the visual alert includes an indication of distance to an object detected by the infrared sensor (104).

14. The system as recited in any preceding claim, wherein the output device (114) includes a speaker and wherein issuing an alert includes producing sound output from the speaker.

15. The system as recited in claim 14, wherein the sound output includes a verbal warning to passengers to clear a path for the trolley (102).
